# EUROPÄISCHE PATENTSCHRIFT

(11) **EP 3 492 796 B1**
(45) Veröffentlichungstag und Bekanntmachung des Hinweises auf die Patenterteilung: **01.09.2021**
(21) Anmeldenummer: 18209524.0
(22) Anmeldetag: 30.11.2018
(51) Int. Cl.: F16L 55/16, F16L 27/113, F16L 25/14

(54) **VERBINDUNGSSYSTEM ZUR REPARATUR VON KUNSTSTOFFVERBUNDROHRSYSTEMEN**
CONNECTION SYSTEM FOR REPAIRING PLASTIC COMPOSITE PIPE SYSTEMS
SYSTÈME DE RACCORDEMENT DESTINÉ À LA RÉPARATION DES SYSTÈMES DE TUBES COMPOSITES EN MATIÈRE PLASTIQUE

(30) Priorität: 30.11.2017 DE 102017128470; 01.08.2018 DE 202018104428 U
(43) Veröffentlichungstag der Anmeldung: 05.06.2019
(73) Patentinhaber: GEBO Armaturen GmbH, 58316 Schwelm (DE)
(72) Erfinder: SÜGGELER, Elke, 45549 Sprockhövel (DE); KNIEPS, Winfried, 45899 Gelsenkrichen (DE)
(74) Vertreter: Schneiders & Behrendt Bochum

(56) Entgegenhaltungen:
- WO-A2-2007/002027
- AT-B- 325 361
- US-A1- 2008 296 892
- US-A1- 2010 019 484

## Beschreibung

Die Erfindung betrifft ein Armatursystem zur Reparatur und / oder zur Erweiterung und / oder Schaffung von Übergängen von Rohrsystemen, insbesondere Kunststoffverbundrohrsystemen, mit wenigstens einem ersten Verbinder zur Herstellung einer Fluidverbindung mit einem ersten Rohr, beispielsweise einem Kunststoffverbundrohr, einem Metallrohr oder einem metallischen Verbindungselement, wenigstens einem zweiten Verbinder zur Herstellung einer Fluidverbindung mit einem zweiten Rohr, insbesondere einem Kunststoffverbundrohr, und wenigstens einem Verbindungselement, welches den ersten Verbinder mit dem zweiten Verbinder verbindet.

In WO 2007/002027 A2, US 2010/019484 A1 und US 2008/296892 A1 sind Armatursysteme zur Reparatur von Rohrsystemen bzw. Verbindung von Rohren offenbart. Aus AT 325 361 B ist ein Teleskopflanschüberschub bekannt.

Aus der WO 2010/021323 A1 ist ein Verbindungsstück für Kunststoffrohre bekannt, dabei wird eine Stützhülse in die zu verbindenden Rohrenden eingeführt. Die Stützhülse ist hohl, um den Durchfluss einer Flüssigkeit zu erlauben. Zum Verbinden der Rohrenden wird ein Verbindungselement von außen auf die Stützhülse aufgeschraubt. Danach werden zwei Adapterringe, welche an den Rohraußendurchmesser des Rohres und den Innendurchmesser des Verbindungselementes angepasst sind, an das Verbindungselement angefügt. Zuletzt werden Endstücke an dem Verbindungselement befestigt, um die Rohrverbindung zu vervollständigen. Die Stützhülse ist genauso wie das Verbindungselement symmetrisch entlang der länglichen Erstreckung ausgebildet, sodass sich diese zum Verbinden von Kunststoffrohren mit gleichen Durchmessern eignen.

Kunststoffverbundrohre ersetzen zunehmend andere Rohrarten in der Hausinstallation. In vielen Fällen sind die Rohrsysteme herstellergebunden und mit eigener Verbindungstechnik versehen. Daher entscheiden sich die meisten Installationsbetriebe für ein einziges System. Reparaturen und Erweiterungen vorhandener Installationen sind somit oft schwierig, da nicht unbedingt nachvollziehbar ist, welches System bereits verbaut wurde. Zu bereits verbauten Systemen müssen passende Teile oft aufwendig beschafft werden, wobei es vorkommen kann, dass verbaute Systeme am Markt nicht mehr erhältlich sind. Außerdem lassen sich Metallrohre nicht einfach mit unterschiedlichen Kunststoffverbundrohrsystemen verbinden, um schnell und flexibel Reparaturen und Erweiterungen vorhandener Installationen unabhängig vom vorliegenden System vorzunehmen.

Es ist daher Aufgabe der Erfindung, eine Möglichkeit zur Herstellung einer Rohrverbindung mit Rohren der oben genannten Art - zum Zwecke der Reparatur oder Erweiterung - zu schaffen, wobei eine einfache und schnelle Verbindung mit unterschiedlichen Rohrsystemen, wie Kunststoffverbundrohrsystemen mit verschiedenen Innen- und / oder Außendurchmessern aber auch mit Metallrohren ermöglicht wird.

Gelöst wird diese Aufgabe durch ein Armatursystem mit den Merkmalen des Anspruchs 1 und durch ein Armatursystem mit den Merkmalen des Anspruchs 2. Dadurch, dass das Armatursystem zur Verbindung mit Kunststoffverbundrohren unterschiedlicher Innen- und / oder Außendurchmesser, nach Art eines Baukastens, eine Mehrzahl auswählbarer Stützhülsen umfasst, kann ein flexibel einsetzbares Armatursystem bereitgestellt werden, welches die Verbindung von Kunststoffverbundrohren unterschiedlicher Innen- und / oder Außendurchmesser mit weiteren Kunststoffverbundrohren oder Metallrohren oder metallischen Verbindungselementen ermöglicht.

Ein solches Armatursystem, das sich wie ein Baukasten zusammenfügen lässt, wobei dieser Baukasten verschiedene auswählbaren Stützhülsen umfasst, bietet die einfache Möglichkeit, die Verbinder des Armatursystems durch Auswahl passender Stützhülsen für die Herstellung einer Fluidverbindung zu einem vorliegenden Kunststoffverbundrohr mit einem vorgegebenen Innen- und Außendurchmesser anzupassen. Um eine Verbindung mit einem weiteren Kunststoffverbundrohr über den zweiten Verbinder herzustellen, kann es erforderlich sein, diesen ebenfalls durch die Auswahl passender Stützhülsen auf das weitere Kunststoffverbundrohr, insbesondere dessen Innen- und Außendurchmesser, anzupassen.

Das Prinzip, sowohl den ersten als auch den zweiten Verbinder des Armatursystems durch Auswahl unterschiedlicher Stützhülsen anzupassen, ermöglicht das Verbinden von Kunststoffverbundrohren unterschiedlicher Hersteller und Größen über das vorgeschlagene Armatursystem. Über einen Gewindeanschluss am ersten Verbinder kann dieser zudem einfach mit einem Metallrohr oder einem metallischen Verbindungselement verbunden werden. Hierdurch sind einfache Erweiterungen und Reparaturen bestehender Rohrsysteme unabhängig von dem Hersteller des bereits verbauten Rohrsystems möglich. Die Auswahl von auf die zu verbindenden Kunststoffverbundrohre abgestimmten Stützhülsen kann einfach vor Ort erfolgen, sodass Reparaturen und Erweiterungen bestehender Rohrsysteme unverzüglich vorgenommen werden können, ohne dass erst passende Teile aufwendig beschafft werden müssen. Die exakte Ermittlung des jeweiligen Innendurchmessers eines vorgefunden Kunststoffverbundrohres kann mittels eines Messdorns erfolgen, dessen Verwendung die Auswahl der geeigneten Stützhülse auf dem jeweils vorgefundenen Kunststoffverbundrohr sicherstellt. Das Armatursystem ist so an verschiedenen Kunststoffverbundrohrsystemen verwendbar und lässt sich schnell montieren. Die auswählbaren Stützhülsen sind so ausgebildet, dass die Verbinder an verschiedenste Rohrinnendurchmesser angepasst werden können. Über die Auswahl der Außenstützhülsen lassen sich die Verbinder auch an unterschiedliche Rohraußendurchmesser anpassen. Der Baukasten des Armatursystems umfasst hierzu verschiedene montierbare Stützhülsen für verschiedene Rohrinnendurchmesser und für unterschiedliche Rohraußendurchmesser. Hierdurch ist mit dem Armatursystem eine einfache und schnelle Verbindung zwischen unterschiedlichen Rohrsystemen mit abweichenden Innen- und / oder Außendurchmessern und im Falle eines Gewindeanschlusses an einem der Verbinder mit Metallrohren bzw. metallischen Verbindungselementen möglich.

Erfindungsgemäß ist vorgesehen, dass die auswählbaren Stützhülsen des Baukastens zweiteilig aus einer Innenstützhülse und einer Außenstützhülse kombinierbar ausgebildet sind, wobei durch Kombination von einer Innenstützhülse und einer Außenstützhülse Aufnahmen zur Aufnahme von Kunststoffverbundrohren unterschiedlicher Innen- und / oder Außendurchmesser herstellbar sind. Die zweiteilige Ausbildung der Stützhülsen ermöglicht eine besonders flexible Anpassung der Verbinder an die zu verbindenden Kunststoffverbundrohre. Durch Kombination unterschiedlicher Innenstützhülsen und unterschiedlicher Außenstützhülsen lassen sich die Stützhülsen des Verbinders flexibel an das aufzunehmende Kunststoffverbundrohr anpassen. Die geeignete Kombination von Innenstützhülsen und Außenstützhülsen macht die Anpassung an spezielle Innendurchmesser des Kunststoffverbundrohres und Außendurchmesser des Kunststoffverbundrohres einfach möglich. Mit gleich ausgebildeten Außenstützhülsen und unterschiedlichen Innenstützhülsen können beispielsweise Kunststoffverbundrohre mit gleichem Außendurchmesser aber unterschiedlichem Innendurchmesser sehr einfach mit dem Armatursystem verbunden werden. In diesem Fall muss nur die Innenstützhülse variiert werden und die Außenstützhülse bleibt gleich.

Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können.

Gemäß einer vorteilhaften Ausgestaltung der Erfindung ist vorgesehen, dass die auswählbaren Stützhülsen mit Aufnahmen zur Aufnahme von Kunststoffverbundrohren unterschiedlicher Innen- und / oder Außendurchmesser versehen sind. Die in den auswählbaren Stützhülsen vorgesehenen Aufnahmen sind vorzugsweise als kreisrunde Aufnahmeelemente ausgebildet, die an den Innen- und / oder Außendurchmesser des aufzunehmenden Kunststoffverbundrohres angepasst sind. Derart ausgebildete Aufnahmen bieten einen sicheren Halt des Kunststoffverbundrohres im derartig ausgestatten Verbinder.

Eine besonders vorteilhafte Ausführungsform der Erfindung sieht vor, dass mindestens eine Aufnahme eine Bezahnung aufweist, wobei die Bezahnung dazu ausgebildet ist, eines der aufzunehmenden Kunststoffverbundrohre zu erfassen. Mit einer Bezahnung der Aufnahme wird der Halt des Kunststoffverbundrohres in der Aufnahme verbessert. Die Zähne der Bezahnung erfassen das Kunststoffverbundrohr hierzu und legen es sicher in der Aufnahme fest.

Von besonderem Vorteil ist gemäß einer Ausgestaltung, dass mindestens ein Verbinder eine Überwurfmutter aufweist, die dazu ausgebildet ist, eines der aufzunehmenden Kunststoffverbundrohre in der Aufnahme der Stützhülse festzuklemmen. Eine solche Überwurfmutter stellt eine einfache Möglichkeit dar, das aufzunehmende Kunststoffverbundrohr ohne Spezialwerkzeug mit dem so ausgestatteten Verbinder einfach zu verbinden und dort sicher zu befestigen.

Eine vorteilhafte Ausführung ist, dass die Überwurfmutter durch Verschraubung an dem Verbinder eine Klemmwirkung erzeugt, welche das aufzunehmende Kunststoffverbundrohr festklemmt. Die Verschraubung der Überwurfmutter an dem Verbinder ist eine einfache Möglichkeit, ohne Spezialwerkzeug das aufzunehmende Kunststoffverbundrohr im Verbinder zu befestigen. Hierdurch ist es besonders einfach möglich, eine Fluidverbindung des Armartursystem mit dem Kunststoffverbundrohr herzustellen.

Besonders vorteilhaft ist die Ausführungsform, dass das Verbindungselement ein Längenausgleichstück umfasst. Mit einem Längenausgleichstück kann die Länge der Verbindung des Verbindungselementes zwischen den beiden Verbindern des Armartursystems einfach und flexibel angepasst werden, z.B. zur Überbrückung einer schadhaften Stelle eines Rohres. Hierdurch ist der Einbau des Armartursystem einfach und das Längenausgleichstück bietet die Möglichkeit Abstände zwischen den Rohren auszugleichen und die Lücke zwischen den Rohren zu überbrücken.

Eine besonders vorteilhafte Ausführungsform der Erfindung sieht vor, dass das Längenausgleichstück durch ein Innenrohr und ein Außenrohr gebildet ist, wobei das Innenrohr in dem Außenrohr zum Längenausgleich nach Art eines Teleskops verschieblich aufgenommen ist. Mit dem verschieblich in dem Außenrohr angeordneten Innenrohr ist eine einfache, aber solide Möglichkeit gegeben, den variablen Längenausgleich durch das so ausgestaltete Längenausgleichstück zu gestatten.

Von besonderem Vorteil ist gemäß einer Ausgestaltung, dass das Längenausgleichstück eine weitere Überwurfmutter aufweist, die dazu ausgebildet ist, das Innenrohr in dem Außenrohr festzuklemmen. Mit einer solchen Überwurfmutter kann das Längenausgleichstück sehr einfach ohne Spezialwerkzeug angepasst und auf die gewünschte Länge festgelegt werden. Hierzu klemmt die Überwurfmutter durch Verschraubung das Innenrohr im Außenrohr fest.

Eine besonders vorteilhafte Ausgestaltung der Erfindung sieht vor, dass die weitere Überwurfmutter auf ein das Innenrohr umgebendes, konisch zulaufendes Klemmelement einwirkt, um das Innenrohr festzuklemmen. Mit einem solchen Klemmelement kann die Festlegung des Innenrohrs im Außenrohr des Längenausgleichstücks sehr einfach, aber sicher dichtend erfolgen. Das konisch zulaufende Klemmelement sorgt für eine sichere Festlegung des Innenrohrs im Außenrohr.

Besonders vorteilhaft ist die Ausführungsform, dass zwischen dem Innenrohr und dem Außenrohr eine Auszugsicherung vorgesehen ist, wobei die Auszugsicherung dazu ausgebildet ist, das Innenrohr gegen Auszug aus dem Außenrohr zu sichern. Hierdurch wird der Halt des Innenrohres in dem Außenrohr verbessert. Die Auszugsicherung kann als Sperrring ausgebildet sein und ist vorzugsweise an dem Innenrohr befestigt, sodass das Außenrohr an der Innenfläche gesichert wird. Das Längenausgleichsstück ist somit mit einer Auszugssicherung versehen, wobei die Auszugssicherung dazu ausgebildet ist, ein Auseinanderziehen der Längenverstellung über die zulässige Maximallänge hinaus, z.B. mittels Sprengring zu verhindern.

Gemäß einer vorteilhaften Ausgestaltung der Erfindung ist vorgesehen, dass der erste Verbinder ein Gewindeanschluss mit einem genormten Gewinde, vorzugsweise nach DIN 10226-1 (ISO 7-1) oder nach ISO 228, weiter vorzugsweise ein Anschlussgewinde nach DIN 10226-1 (ISO 7-1) oder ein Befestigungsgewinde nach ISO 228, aufweist. Mit einem solchen Verbinder lassen sich handelsübliche Anschlussstücke sehr einfach mit dem Armatursystem über den ersten Verbinder anschließen. Hierdurch kann eine Fluidverbindung zu einem Metallrohr einfach durch Verschraubung eines handelsüblichen Anschlussstückes, welches an dem Metallrohr angeordnet ist hergestellt werden. Außerdem kann der erste Verbinder auch durch ein in das Metallrohr eingeschnittenes Gewinde an dem Gewindeanschluss des ersten Verbinders verschraubt werden. Hierdurch wird also eine Möglichkeit geschaffen, auf Kunststoffverbundrohren unterschiedlicher Hersteller systemunabhängig einen Gewindeübergang herzustellen. Durch den Gewindeanschluss können handelsübliche Fittings, insbesondere aus Messing, angeschlossen werden, wie auch T-Stücke, Winkel, Reduzierungen und Leitungsverschlüsse, sodass das Armatursystem flexibel verwendbar ist.

Eine vorteilhafte Ausführung der Erfindung ist, dass der Gewindeanschluss als ein Außengewinde ausgebildet ist. Ein solches Außengewinde oder auch Bolzengewinde ist in die äußere Oberfläche des ersten Verbinders eingeschnitten und ermöglicht so eine einfache Herstellung einer Fluidverbindung mit einem Metallrohr. Zur Herstellung der Fluidverbindung kann das Metallrohr oder ein mit dem Metallrohr verbundenes handelsübliches Anschlussstück sehr einfach über den ersten Verbinder aufgeschraubt werden, um so eine feste und dichte Verbindung mit dem Armatursystem herzustellen.

Von besonderem Vorteil ist gemäß einer Ausgestaltung, dass der Gewindeanschluss als ein Innengewinde ausgebildet ist. Ein solches Innengewinde oder auch Muttergewinde ist in eine Innenfläche des ersten Verbinders eingeschnitten und ermöglicht so eine einfache Herstellung einer Fluidverbindung mit einem Metallrohr. Zur Herstellung der Fluidverbindung kann das Metallrohr oder ein mit dem Metallrohr verbundenes handelsübliches Anschlussstück sehr einfach in den Verbinder eingeschraubt werden, um so eine feste und dichte Verbindung mit dem Armatursystem herzustellen.

Eine besonders vorteilhafte Ausführungsform der Erfindung sieht vor, dass der erste Verbinder zur Herstellung einer Fluidverbindung mit einem Metallrohr aus Stahl, Edelstahl oder Kupfer ausgebildet ist. Hierdurch lassen sich die Kunststoffverbundrohre sehr einfach mit handelsüblichen Metallrohren verbinden, wodurch zum Zwecke der Reparatur oder Erweiterung schnell eine dichte und sichere Fluidverbindung hergestellt werden kann.

Weitere Merkmale, Einzelheiten und Vorteile der Erfindung ergeben sich aufgrund der nachfolgenden Beschreibung sowie anhand der Zeichnungen. Ausführungsbeispiele der Erfindung sind in den folgenden Zeichnungen rein schematisch dargestellt und werden nachfolgend näher beschrieben. Einander entsprechende Gegenstände sind in den Figuren mit dem gleichen Bezugszeichen versehen. Es zeigen:
- Figur 1: Armatursystem zur Verbindung zweier Kunststoffverbundrohre,
- Figur 2: Armatursystem zur Verbindung von einem Kunststoffverbundrohr und einem Metallrohr oder einem metallischen Verbindungselement,
- Figur 3: Messdorn und
- Figur 4: Seitenansicht von Messdorn.

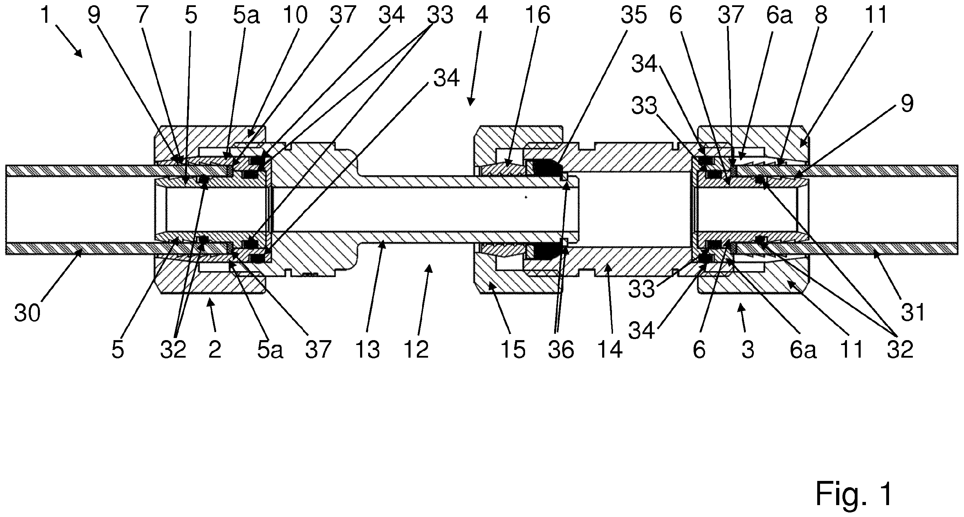

In Figur 1 mit dem Bezugszeichen 1 bezeichnet ist ein Armatursystem 1 rein schematisch dargestellt. Das hier gezeigte Armartursystem 1 dient der Verbindung zweier Kunststoffverbundrohre 30, 31. Hierzu weist das hier gezeigte Armartursystem 1 einen ersten Verbinder 2 zur Herstellung einer Fluidverbindung des Armartursystems 1 mit dem einen Kunststoffverbundrohr 30 auf. Ein zweiter Verbinder 3 dient zur Herstellung einer Fluidverbindung des Armatursystems 1 mit dem zweiten Kunststoffverbundrohr 31. Zwischen den Verbindern 2, 3 ist ein Verbindungselement 4 angeordnet, welches eine Fluidverbindung zwischen dem ersten Verbinder 2 und dem zweiten Verbinder 3 bereitstellt. Das Armartursystem 1 ist zur Verbindung von Kunststoffrohren 30, 31, insbesondere mit unterschiedlichen Innen- und / oder Außendurchmessern geeignet. Hierzu umfasst das Armartursystem 1 eine Art Baukasten, der aus einer Mehrzahl auswählbarer Stützhülsen 5, 5a, 6, 6a besteht. Durch die Auswahl geeigneter Stützhülsen 5, 5a, 6, 6a und das Einfügen der Stützhülsen 5, 5a, in den ersten Verbinder 2 kann eine einfache und dichte Verbindung mit dem ersten Kunststoffverbundrohr 30 hergestellt werden. Auch der zweite Verbinder 3 ist mit einer ausgewählten Stützhülse 6, 6a versehen, um eine einfache und dichte Fluidverbindung zum zweiten Kunststoffverbundrohr 31 herzustellen. In dem Baukasten des Armartursystems 1 befinden sich passende Stützhülsen 5, 5a, 6, 6a für Kunststoffverbundrohre unterschiedlicher Hersteller und Größen. Der Innendurchmesser der Rohre unterscheidet sich je nach Hersteller, sodass hierauf angepasste Stützhülsen 5, 5a, 6, 6a im Baukastensystem des vorgeschlagenen Armartursystems 1 enthalten sind. Die auswählbaren Stützhülsen 5, 5a, 6, 6a sind mit einer Aufnahme 7, 8 versehen, welche Kunststoffverbundrohre 30, 31 auch unterschiedlicher Innen- und / oder Außendurchmesser aufnehmen können. In einer besonders vorteilhaften, hier gezeigten Ausgestaltung sind die auswählbaren Stützhülsen 5, 5a, 6, 6a zweiteilig aufgebaut. Diese zweiteilig aufgebauten Stützhülsen 5, 5a, 6, 6a bestehen jeweils aus einer Innenstützhülse 5, 6, und einer Außenstützhülse 5a, 6a. Durch Zusammenfügen dieser beiden Stützhülsenteile 5, 5a oder 6, 6a kann jeweils eine Aufnahme 7, 8 für die Kunststoffverbundrohre 30, 31 hergestellt werden, die für unterschiedliche Innen- und oder Außendurchmesser geeignet ist. So kann durch geeignete Kombination von passenden Innenstützhülsen 5, 6 und Außenstützhülsen 5a, 6a aus dem Baukasten des Armartursystems 1 eine passende Aufnahme 7, 8 für Kunststoffverbundrohre 30, 31 jedes Herstellers erstellt werden. Mit gleich ausgebildeten Außenstützhülsen 5a, 6a und unterschiedlichen Innenstützhülsen 5, 6 können beispielsweise Kunststoffverbundrohre 30, 31 mit gleichem Außendurchmesser aber unterschiedlichem Innendurchmesser sehr einfach mit dem Armatursystem 1 verbunden werden. In diesem Fall muss nur die Innenstützhülse 5, 6 variiert werden und die Außenstützhülse 5a, 6a bleibt gleich. Zur Abdichtung der hergestellten Fluidverbindung sind in der Stützhülse 5, 5a, 6, 6a, genauer gesagt in der Aufnahme 7, 8, Dichtungen 32 bzw. Dichtringe 32 vorgesehen. Zwischen der Innenhülse 5, 6 und der Außenhülse 5a, 6a der Stützhülse 5, 5a, 6, 6a ist ebenfalls eine Dichtung 33 bzw. ein Dichtring 33 vorgesehen. Zur weiteren Abdichtung ist zwischen dem Verbindungselement 4 und der Außenstützhülse 5a, 6a ebenfalls eine Dichtung 34 vorgesehen. Zu erkennen ist, dass die Aufnahme 7, 8 sowohl rohrinnenseitig an der Innenstützhülse 5, 6 als auch rohraußenseitig an der Außenstützhülse 5a, 6a eine Bezahnung 9 aufweist, welche die aufgenommenen Kunststoffverbundrohre 30, 31 erfasst und gegen Herausziehen sichert. Die beiden in Figur 1 gezeigten Verbinder 2, 3 weisen jeweils eine Überwurfmutter 10, 11 auf, die dazu ausgebildet ist, die aufgenommenen Kunststoffverbundrohre 30, 31 in den Aufnahmen 7, 8 der Stützhülsen 5, 5a, 6, 6a festzuklemmen. Hierdurch ist eine einfache Montage des Armatursystems 1 zwischen zwei Kunststoffverbundrohren 30, 31 ohne Spezialwerkzeug möglich. In Figur 1 ist außerdem zu erkennen, dass das Verbindungselement 4 zwischen den Verbindern 2, 3 ein Längenausgleichstück 12 umfasst, mit dem Toleranzen zwischen den beiden Kunststoffverbundrohren 30, 31 bezüglich der Länge einfach ausgeglichen werden können. Das Längenausgleichstück 12 umfasst im hier gezeigten Beispiel ein Innenrohr 13 und ein Außenrohr 14. Das Innenohr 13 ist in dem Außenrohr 14 zum Längenausgleich verschieblich angeordnet, wobei Innenrohr 13 und Außenrohr 14 ein Teleskop bilden. Das Innenrohr 13 ist mit einer Auszugsicherung 36 versehen. Diese Auszugsicherung 36 bewirkt, dass das Innenrohr 13 gegen Auszug aus Außenrohr 14 gesichert wird. Hierdurch wird der Halt des Innenrohres 13 in dem Außenrohr 14 verbessert. Die Auszugsicherung 36 ist als Sperrring ausgebildet, der das Außenrohr 14 an der Innenfläche sichert. Die Einhaltung des maximal zulässigen Längenausgleichs, der durch das Auseinanderziehen des Innenrohres 13 und des Außenrohres 14 bewirkt wird, wird somit durch eine Auszugssicherung 36, die auf dem Innenrohr 13 in Form eines Sprengrings aufgebracht ist, gewährleistet. So kann der Längenausgleich über das Längenausgleichstück 12 einfach durch Ineinander- oder Auseinanderschieben des Innenrohrs 13 und des Außenrohr 14 erfolgen. Zum Festklemmen des Innenrohrs 13 im Außenrohr 14 ist eine weitere Überwurfmutter 15 vorgesehen, die durch Verschraubung eine Klemmwirkung erzeugt, um das Innenohr 13 im Außenrohr 14 festzuklemmen. Hierdurch ist der Längenausgleich ohne Spezialwerkzeug einfach möglich. In Figur 1 ist außerdem ein das Innenrohr 13 umgebendes, konisch zulaufendes Klemmelement 16 zu erkennen, auf welches die Überwurfmutter 15 bei Verschraubung einwirkt, um das Innenrohr 13 festzuklemmen. Ein solches Klemmelement 16 kann die Festlegung des Innenrohrs 13 im Außenrohr 14 des Längenausgleichstücks 12 sehr einfach bewerkstelligen. Zur Abdichtung zwischen Innenrohr 13 und Außenrohr 14 ist eine weitere Dichtung 35 vorgesehen, die von dem Klemmelement 16 bei Verschraubung der Überwurfmutter 15 eingeklemmt wird. Zur weiteren Abdichtung sind an der Stirnseite der in den Aufnahmen 7, 8 aufgenommenen Kunststoffverbundrohre 30, 31 weitere Dichtungen 37 angeordnet. Diese weitere Dichtung 37 ist vorzugsweise als Polyethylen-Ring ausgebildet. Ein solcher Ring 37 verhindert eine Kontaktkorrosion zwischen Messingteilen des Armatursystems 1 und Aluminiumbestandteilen der Kunststoffverbundrohre 30, 31.

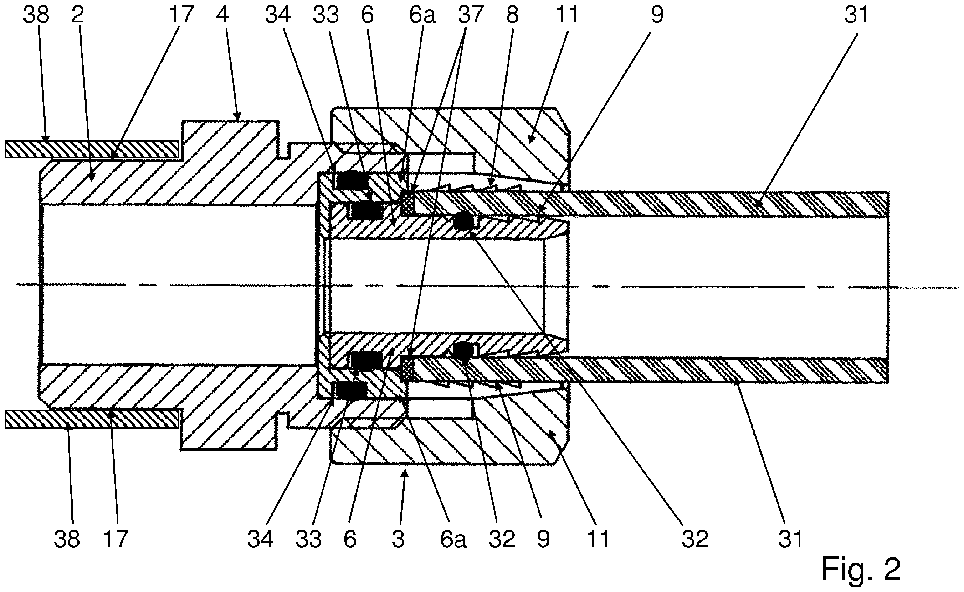

In Figur 2 mit dem Bezugszeichen 1 bezeichnet ist ein weiteres Armatursystem 1 rein schematisch dargestellt. Das hier gezeigte Armartursystem 1 dient der Verbindung von Kunststoffverbundrohren 31 mit Metallrohren 38 oder metallischen Verbindungselementen 38. Hierzu weist das Armartursystem 1 einen ersten Verbinder 2 zur Herstellung einer Fluidverbindung des Armartursystems 1 mit dem Metallrohr 38 oder dem metallischen Verbindungselement 38 auf. Ein zweiter Verbinder 3 dient hier zur Herstellung einer Fluidverbindung des Armatursystems 1 mit einem Kunststoffverbundrohr 31. Zwischen den Verbindern 2, 3 ist ein Verbindungselement 4 angeordnet, welches eine Fluidverbindung zwischen dem ersten Verbinder 2 und dem zweiten Verbinder 3 bereitstellt. Der erste Verbinder 2 weist ein Gewindeanschluss 17 auf zur Verbindung mit einem Metallrohr 38 oder einem metallischen Verbindungselement 38. Dieser Gewindeanschluss 17 kann als genormtes Gewinde, beispielsweise nach DIN 10226-1 (ISO 7-1) oder ISO 228, ausgelegt sein, um handelsübliche Anschlussstücke sehr einfach mit dem Armatursystem 1 über den ersten Verbinder 2 anzuschließen. Hierzu kann der Gewindeanschluss 17 vorzugsweise als Anschlussgewinde nach DIN 10226-1 (ISO 7-1) oder als Befestigungsgewinde nach ISO 228 ausgebildet sein. Außerdem kann der erste Verbinder 2 auch, wie in Figur 2 gezeigt, durch ein in das Metallrohr 38 eingeschnittenes Gewinde an dem Gewindeanschluss 17 des ersten Verbinders verschraubt werden. Hierdurch wird sehr einfach auf Kunststoffverbundrohren 31 unterschiedlicher Hersteller systemunabhängig ein Gewindeübergang bereitgestellt. Der Gewindeanschluss 17 ist als ein Außengewinde in die äußere Oberfläche des ersten Verbinders 2 eingeschnitten und ermöglicht so eine einfache Herstellung einer Fluidverbindung mit dem Metallrohr 38. Das Metallrohr 38 kann aus Stahl, Edelstahl oder Kupfer sein. Das Armartursystem 1 ist zur Verbindung von Kunststoffrohren 31, insbesondere mit unterschiedlichen Innen- und / oder Außendurchmessern geeignet. Hierzu umfasst das Armartursystem 1 eine Art Baukasten, der aus einer Mehrzahl auswählbarer Stützhülsen 6, 6a besteht. Durch die Auswahl geeigneter Stützhülsen 6, 6a und das Einfügen der Stützhülsen 6, 6a, in den zweiten Verbinder 3 kann eine einfache und dichte Verbindung mit dem Kunststoffverbundrohr 31 hergestellt werden. In dem Baukasten des Armartursystems 1 befinden sich passende Stützhülsen 6, 6a für Kunststoffverbundrohre unterschiedlicher Hersteller und Größen. Der Innendurchmesser der Rohre unterscheidet sich je nach Hersteller, sodass hierauf angepasste Stützhülsen 6, 6a im Baukastensystem des vorgeschlagenen Armartursystems 1 enthalten sind. Die auswählbaren Stützhülsen 6, 6a sind mit einer Aufnahme 8 versehen, welche Kunststoffverbundrohre 31 auch unterschiedlicher Innen- und / oder Außendurchmesser aufnehmen können. In einer besonders vorteilhaften, hier gezeigten Ausgestaltung sind die auswählbaren Stützhülsen 6, 6a zweiteilig aufgebaut. Diese zweiteilig aufgebauten Stützhülsen 6, 6a bestehen jeweils aus einer Innenstützhülse 6 und einer Außenstützhülse 6a. Durch Zusammenfügen dieser beiden Stützhülsenteile 6, 6a kann jeweils eine Aufnahme 8 für die Kunststoffverbundrohre 31 hergestellt werden, die für unterschiedliche Innen- und oder Außendurchmesser geeignet ist. So kann durch geeignete Kombination von passenden Innenstützhülsen 6 und Außenstützhülsen 6a aus dem Baukasten des Armartursystems 1 eine passende Aufnahme 8 für Kunststoffverbundrohre 31 jedes Herstellers erstellt werden. Mit gleich ausgebildeten Außenstützhülsen 6a und unterschiedlichen Innenstützhülsen 6 können beispielsweise Kunststoffverbundrohre 31 mit gleichem Außendurchmesser aber unterschiedlichem Innendurchmesser sehr einfach mit dem Armatursystem 1 gemäß Figur 2 verbunden werden. In diesem Fall muss nur die Innenstützhülse 6 variiert werden und die Außenstützhülse 6a bleibt gleich. Zur Abdichtung der hergestellten Fluidverbindung sind in der Stützhülse 6, 6a, genauer gesagt in der Aufnahme 8, Dichtungen 32 bzw. Dichtringe 32 vorgesehen. Zwischen der Innenhülse 6 und der Außenhülse 6a der Stützhülse 6, 6a ist ebenfalls eine Dichtung 33 bzw. ein Dichtring 33 vorgesehen. Zur weiteren Abdichtung ist zwischen dem Verbindungselement 4 und der Außenstützhülse 6a ebenfalls eine Dichtung 34 vorgesehen. Hier auch gut zu erkennen ist, dass die Aufnahme 8 sowohl rohrinnenseitig an der Innenstützhülse 6 als auch rohraußenseitig an der Außenstützhülse 6a eine Bezahnung 9 aufweist, welche die aufgenommenen Kunststoffverbundrohre 31 erfasst und gegen Herausziehen sichert. Der zweite Verbinder 3 weist eine Überwurfmutter 11 auf, die dazu ausgebildet ist, die aufgenommenen Kunststoffverbundrohre 31 in der Aufnahme 8 der Stützhülsen 6, 6a festzuklemmen. Hierdurch ist eine einfache Montage des Armatursystems 1 zwischen Kunststoffverbundrohren 31 und Metallrohren 38 bzw. metallischen Verbindungselementen 38 ohne Spezialwerkzeug möglich. Zur weiteren Abdichtung ist an der Stirnseite des in der Aufnahme 8 aufgenommenen Kunststoffverbundrohres eine weitere Dichtung 37 angeordnet. Diese weitere Dichtung 37 ist vorzugsweise als Polyethylen-Ring ausgebildet. Ein solcher Ring 37 verhindert eine Kontaktkorrosion zwischen Messingteilen des Armatursystems 1 und Aluminiumbestandteilen des Kunststoffverbundrohres 31.

Weiterhin ist vorgesehen, dass das Armatursystem 1 gemäß Figur 2 ein Verbindungselement 4 zwischen den Verbindern 2, 3 aufweist, dass wie in Figur 1, ein Längenausgleichstück 12 (Fig. 1) umfasst, mit dem Toleranzen zwischen den beiden Rohren 31, 38 bezüglich der Länge einfach ausgeglichen werden können. Das Längenausgleichstück 12 (Fig. 1) umfasst im in Figur 1 gezeigten Beispiel ein Innenrohr 13 (Fig. 1) und ein Außenrohr 14 (Fig. 1). Das Innenohr 13 (Fig. 1) ist in dem Außenrohr 14 (Fig. 1) zum Längenausgleich verschieblich angeordnet, wobei Innenrohr 13 (Fig. 1) und Außenrohr 14 (Fig. 1) ein Teleskop bilden. Das Innenrohr 13 (Fig. 1) ist mit einer Auszugsicherung 36 (Fig. 1) versehen. Diese Auszugsicherung 36 (Fig. 1) bewirkt, dass das Innenrohr 13 (Fig. 1) gegen Auszug aus Außenrohr 14 (Fig. 1) gesichert wird. Hierdurch wird der Halt des Innenrohres 13 (Fig. 1) in dem Außenrohr 14 (Fig. 1) verbessert. Die Auszugsicherung 36 (Fig. 1) ist als Sperrring ausgebildet, der das Außenrohr 14 (Fig. 1) an der Innenfläche sichert. Die Einhaltung des maximal zulässigen Längenausgleichs, der durch das Auseinanderziehen des Innenrohres 13 (Fig. 1) und des Außenrohres 14 (Fig. 1) bewirkt wird, wird somit durch eine Auszugssicherung 36 (Fig. 1), die auf dem Innenrohr 13 (Fig. 1) in Form eines Sprengrings aufgebracht ist, gewährleistet. So kann der Längenausgleich über das Längenausgleichstück 12 (Fig. 1) einfach durch Ineinander- oder Auseinanderschieben des Innenrohrs 13 (Fig. 1) und des Außenrohr 14 (Fig. 1) erfolgen. Zum Festklemmen des Innenrohrs 13 (Fig. 1) im Außenrohr 14 (Fig. 1) ist eine weitere Überwurfmutter 15 (Fig. 1) vorgesehen, die durch Verschraubung eine Klemmwirkung erzeugt, um das Innenohr 13 (Fig. 1) im Außenrohr 14 (Fig. 1) festzuklemmen. Hierdurch ist der Längenausgleich ohne Spezialwerkzeug einfach möglich. In Figur 1 ist außerdem ein das Innenrohr 13 umgebendes, konisch zulaufendes Klemmelement 16 (Fig. 1) zu erkennen, auf welches die Überwurfmutter 15 (Fig. 1) bei Verschraubung einwirkt, um das Innenrohr 13 (Fig. 1) festzuklemmen. Ein solches Klemmelement 16 (Fig. 1) kann die Festlegung des Innenrohrs 13 im Außenrohr 14 (Fig. 1) des Längenausgleichstücks 12 (Fig. 1) sehr einfach bewerkstelligen. Zur Abdichtung zwischen Innenrohr 13 (Fig. 1) und Außenrohr 14 (Fig. 1) ist eine weitere Dichtung 35 (Fig. 1) vorgesehen, die von dem Klemmelement 16 (Fig. 1) bei Verschraubung der Überwurfmutter 15 (Fig. 1) eingeklemmt wird.

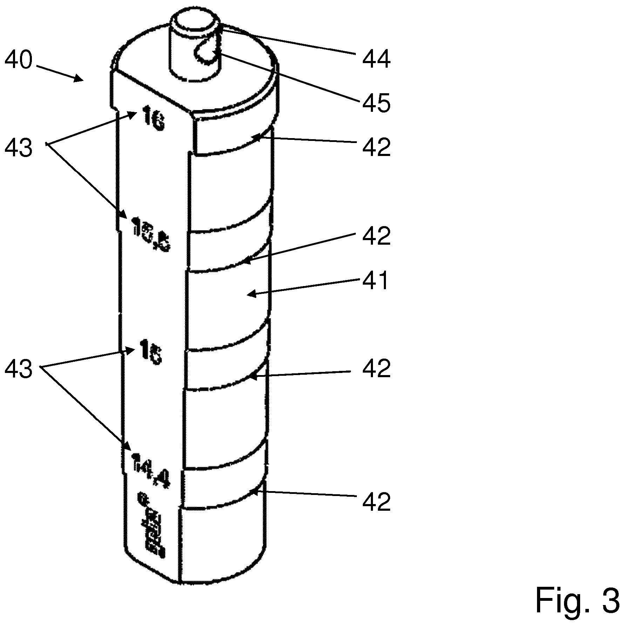

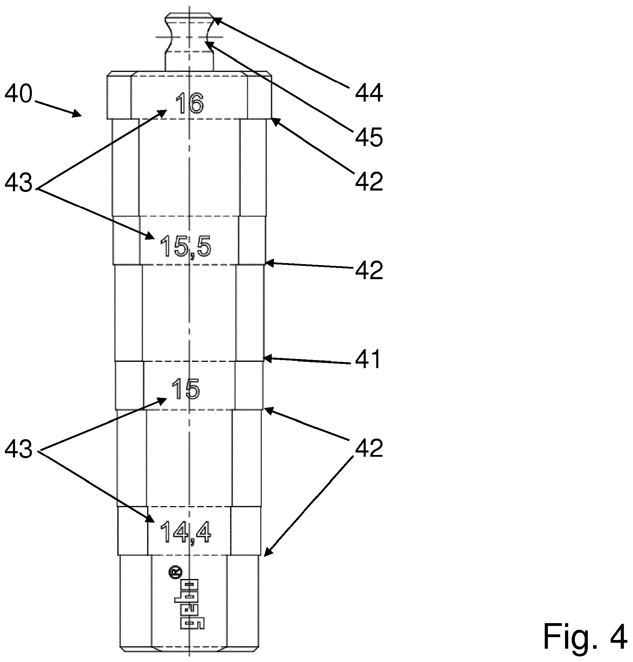

Um die Verbindung des Armatursystems 1 mit Kunststoffverbundrohren 30, 31 unterschiedlicher Durchmesser einfacher zu gestalten und um aus dem Baukasten schnell geeignete Stützhülsen 5, 6 für die Verbinder 2, 3 auszuwählen wird ein in Figur 3 gezeigter Messdorn 40 vorgeschlagen. Die exakte Ermittlung des jeweiligen Innendurchmessers des vorgefunden Kunststoffverbundrohres 30, 31 kann mittels dieses Messdorns 40 erfolgen, dessen Verwendung die Auswahl der geeigneten Stützhülse 5, 6 auf dem jeweils vorgefundenen Kunststoffverbundrohr 30, 31 sicherstellt. Hierzu wird der gezeigte Messdorn 40 in das vorgefundene Kunststoffverbundrohr 30, 31 eingeführt. Über die stufenförmige ausgebildete Außenkontur 41 des Messdorns 40, die auch gut aus Figur 4 ersichtlich ist, werden die verschiedenen Innendurchmesser der Kunststoffverbundrohre 30, 31 gemessen, um eine geeignete Innenstützhülse 5, 6 aus dem Bausatz auswählbarer Stützhülsen 5, 6 auswählen zu können. Die Stufen 42 der Außenkontur 41 des Messdorns 40 bilden einen Versatz, der als Anschlag für die Kunststoffverbundrohre 30, 31 dient. Durch den Anschlag an die Stufen 42 gegen die Versätze der Außenkontur 41 des Messdorns 40 kann sehr schnell und zuverlässig der vorliegende Innendurchmesser des Kunststoffverbundrohres 30, 31 festgestellt werden. Mit der Gravur 43 oberhalb des jeweils auf den gekennzeichneten Innendurchmesser zutreffenden Versatzes 42 kann die Größe des Kunststoffverbundrohres 30, 31 einfach an dem Messdorn 40 abgelesen werden. Am oberen Ende des Messdorns 40 befindet sich ein dornförmiges Befestigungselement 44, an welches ein Montageknauf oder ein Schlüsselring befestigt werden kann. Hierzu verfügt das Befestigungselement 44 über eine Durchführung 45. In diese Durchführung 45 kann auch ein Schraubenzieher eingeführt werden, um den Messdorn 40 nach der Messung des Innendurchmessers wieder aus dem Kunststoffverbundrohr 30, 31 zu entfernen.

### Bezugszeichenliste

- 1: Armatursystem
- 2: Erster Verbinder
- 3: Zweiter Verbinder
- 4: Verbindungselement
- 5: Erste Stützhülse (Innenstützhülse), 5a Erste Stützhülse (Außenstützhülse)
- 6: Zweite Stützhülse (Innenstützhülse), 6a Zweite Stützhülse (Außenstützhülse)
- 7: Erste Aufnahme
- 8: Zweite Aufnahme
- 9: Bezahnung
- 10: Erste Überwurfmutter
- 11: Zweite Überwurfmutter
- 12: Längenausgleichstück
- 13: Innenrohr
- 14: Außenrohr
- 15: Dritte Überwurfmutter
- 16: Klemmelement
- 17: Gewindeanschluss
- 30: Erstes Kunststoffverbundrohr
- 31: Zweites Kunststoffverbundrohr
- 32: Erste Dichtung
- 33: Zweite Dichtung
- 34: Dritte Dichtung
- 35: Vierte Dichtung
- 36: Auszugsicherung (Sperrring)
- 37: Fünfte Dichtung
- 38: Metallrohr oder metallisches Verbindungselement
- 40: Messdorn
- 41: Außenkontur
- 42: Stufen
- 43: Gravur
- 44: Befestigungselement
- 45: Durchführung

## Patentansprüche

1. Armatursystem (1) zur Reparatur von Kunststoffverbundrohrsystemen, mit
- wenigstens einem ersten Verbinder (2) zur Herstellung einer Fluidverbindung mit einem ersten Rohr (30, 38),
- wenigstens einem zweiten Verbinder (3) zur Herstellung einer Fluidverbindung mit einem zweiten Rohr (31), und
- wenigstens einem Verbindungselement (4), welches den ersten Verbinder (2) mit dem zweiten Verbinder (3) verbindet,
wobei das Armatursystem (1) zur Verbindung mit Kunststoffverbundrohren (30, 31) unterschiedlicher Innen- und / oder Außendurchmesser nach Art eines Baukastens eine Mehrzahl auswählbarer Stützhülsen (5, 5a, 6, 6a) umfasst,
- wobei der erste Verbinder (2) zur Herstellung einer Fluidverbindung mit einem ersten Kunststoffverbundrohr (30) vorgesehen ist,
- wobei der zweite Verbinder (3) zur Herstellung einer Fluidverbindung mit einem zweiten Kunststoffverbundrohr (31) vorgesehen ist,
- wobei der erste Verbinder (2) mindestens eine Stützhülse (5, 5a) zur Verbindung mit dem ersten Kunststoffverbundrohr (30) aufweist,
- wobei der zweite Verbinder (3) mindestens eine Stützhülse (6, 6a) zur Verbindung mit dem zweiten Kunststoffverbundrohr (31) aufweist, **dadurch gekennzeichnet, dass** die auswählbaren Stützhülsen (5, 5a, 6, 6a) zweiteilig aus einer Innenstützhülse (5, 6) und einer Außenstützhülse (5a, 6a) kombinierbar ausgebildet sind, wobei durch Kombination von einer Innenstützhülse (5, 6) und einer Außenstützhülse (5a, 6a) Aufnahmen (7, 8) zur Aufnahme von Kunststoffverbundrohren (30, 31) unterschiedlicher Innen- und / oder Außendurchmesser herstellbar sind.

2. Armatursystem (1) zur Reparatur von Rohrsystemen, mit
- wenigstens einem ersten Verbinder (2) zur Herstellung einer Fluidverbindung mit einem ersten Rohr (38),
- wenigstens einem zweiten Verbinder (3) zur Herstellung einer Fluidverbindung mit einem zweiten Rohr (31), und
- wenigstens einem Verbindungselement (4), welches den ersten Verbinder (2) mit dem zweiten Verbinder (3) verbindet,
wobei das Armatursystem (1) zur Verbindung mit Kunststoffverbundrohren (31) unterschiedlicher Innen- und / oder Außendurchmesser nach Art eines Baukastens eine Mehrzahl auswählbarer Stützhülsen (6, 6a) umfasst,
- wobei der erste Verbinder (2) zur Herstellung einer Fluidverbindung mit einem Metallrohr (38) oder einem metallischen Verbindungselement (38) vorgesehen ist,
- wobei der zweite Verbinder (3) zur Herstellung einer Fluidverbindung mit einem Kunststoffverbundrohr (31) vorgesehen ist, und
- wobei der erste Verbinder (2) mindestens ein Gewindeanschluss (17) zur Verbindung mit dem Metallrohr (38) oder dem metallischen Verbindungselement (38) aufweist, **dadurch gekennzeichnet, dass**
der zweite Verbinder (3) mindestens eine Stützhülse (6, 6a) zur Verbindung mit dem Kunststoffverbundrohr (31) aufweist, wobei die auswählbaren Stützhülsen (6, 6a) zweiteilig aus einer Innenstützhülse (6) und einer Außenstützhülse (6a) kombinierbar ausgebildet sind, wobei durch Kombination von einer Innenstützhülse (6) und einer Außenstützhülse (6a) Aufnahmen (8) zur Aufnahme von Kunststoffverbundrohren (31) unterschiedlicher Innen- und / oder Außendurchmesser herstellbar sind.

3. Armatursystem (1) nach Anspruch 1 oder 2, **dadurch gekennzeichnet, dass** die auswählbaren Stützhülsen (5, 5a, 6, 6a) mit Aufnahmen (7, 8) zur Aufnahme von Kunststoffverbundrohren (30, 31) unterschiedlicher Innen- und / oder Außendurchmesser versehen sind.

4. Armatursystem (1) nach einem der vorhergehenden Ansprüche, **dadurch gekennzeichnet, dass** mindestens eine Aufnahme (7, 8) eine Bezahnung (9) aufweist, wobei die Bezahnung (9) dazu ausgebildet ist, eines der aufzunehmenden Kunststoffverbundrohre (30, 31) zu erfassen.

5. Armatursystem (1) nach einem der vorhergehenden Ansprüche, **dadurch gekennzeichnet, dass** mindestens ein Verbinder (2, 3) eine Überwurfmutter (10, 11) aufweist, die dazu ausgebildet ist, eines der aufzunehmenden Kunststoffverbundrohre (30, 31) in der Aufnahme (7, 8) der Stützhülse (5, 5a, 6, 6a) festzuklemmen.

6. Armatursystem (1) nach Anspruch 5, **dadurch gekennzeichnet, dass** die Überwurfmutter (10, 11) durch Verschraubung an dem Verbinder (2, 3) eine Klemmwirkung erzeugt, welche das aufzunehmende Kunststoffverbundrohr (30, 31) festklemmt.

7. Armatursystem (1) nach einem der vorhergehenden Ansprüche, **dadurch gekennzeichnet, dass** das Verbindungselement (4) ein Längenausgleichstück (12) umfasst.

8. Armatursystem (1) nach Anspruch 7, **dadurch gekennzeichnet, dass** das Längenausgleichstück (12) durch ein Innenrohr (13) und ein Außenrohr (14) gebildet ist, wobei das Innenrohr (13) in dem Außenrohr (14) zum Längenausgleich nach Art eines Teleskops verschieblich aufgenommen ist.

9. Armatursystem (1) nach Anspruch 8, **dadurch gekennzeichnet, dass** das Längenausgleichstück (12) eine Überwurfmutter (15) aufweist, die dazu ausgebildet ist, das Innenrohr (13) in dem Außenrohr (14) festzuklemmen.

10. Armatursystem (1) nach Anspruch 9, **dadurch gekennzeichnet, dass** die Überwurfmutter (15) auf ein das Innenrohr (13) umgebendes, konisch zulaufendes Klemmelement (16) einwirkt, um das Innenrohr (13) festzuklemmen.

11. Armatursystem (1) nach einem der Ansprüche 8 bis 10, **dadurch gekennzeichnet, dass** zwischen dem Innenrohr (13) und dem Außenrohr (14) eine Auszugsicherung (36) vorgesehen ist, wobei die Auszugsicherung (36) dazu ausgebildet ist, das Innenrohr (13) gegen Auszug aus dem Außenrohr (14) zu sichern.

12. Armatursystem (1) nach Anspruch 2 oder nach Anspruch 2 und einem der Ansprüche 3 bis 11, **dadurch gekennzeichnet, dass** der erste Verbinder (2) ein Gewindeanschluss (17) mit einem genormten Gewinde, vorzugsweise nach DIN 10226-1 (ISO 7-1) oder nach ISO 228, weiter vorzugsweise ein Anschlussgewinde nach DIN 10226-1 (ISO 7-1) oder ein Befestigungsgewinde nach ISO 228, aufweist.

13. Armatursystem (1) nach Anspruch 2 oder nach Anspruch 2 und einem der Ansprüche 3 bis 12, **dadurch gekennzeichnet, dass** der Gewindeanschluss (17) als ein Außengewinde ausgebildet ist.

14. Armatursystem (1) nach Anspruch 2 oder nach Anspruch 2 und einem der Ansprüche 3 bis 12, **dadurch gekennzeichnet, dass** der Gewindeanschluss (17) als ein Innengewinde ausgebildet ist.

15. Armatursystem (1) nach Anspruch 2 oder nach Anspruch 2 und einem der Ansprüche 3 bis 14, **dadurch gekennzeichnet, dass** der erste Verbinder (2) zur Herstellung einer Fluidverbindung mit einem Metallrohr (38) aus Stahl, Edelstahl oder Kupfer ausgebildet ist.

## Claims

1. A fitting system (1) for repairing plastic composite pipe systems, having
- at least one first connector (2) for producing a fluid connection to a first pipe (30, 38),
- at least one second connector (3) for producing a fluid connection to a second pipe (31), and
- at least one connecting element (4), which connects the first connector (2) to the second connector (3),
wherein the fitting system (1) comprises a plurality of selectable supporting sleeves (5, 5a, 6, 6a) for connecting to plastic composite pipes (30, 31) with different inner and/or outer diameters in the manner of a modular system,
- wherein the first connector (2) is provided for producing a fluid connection to a first plastic composite pipe (30),
- wherein the second connector (3) is provided for producing a fluid connection to a second plastic composite pipe (31),
- wherein the first connector (2) has at least one supporting sleeve (5, 5a) for connecting to the first plastic composite pipe (30),
- wherein the second connector (3) has at least one supporting sleeve (6, 6a) for connecting to the second plastic composite pipe (31),
**characterised in that** the selectable supporting sleeves (5, 5a, 6, 6a) are configured combinably in two parts comprising an inner supporting sleeve (5, 6) and an outer supporting sleeve (5a, 6a), wherein by combining an inner supporting sleeve (5, 6) and an outer supporting sleeve (5a, 6a), receptacles (7, 8) for receiving plastic composite pipes (30, 31) of different inner and/or outer diameters can be produced.

2. A fitting system (1) for repairing pipe systems, having
- at least one first connector (2) for producing a fluid connection to a first pipe (38),
- at least one second connector (3) for producing a fluid connection to a second pipe (31), and
- at least one connecting element (4), which connects the first connector (2) to the second connector (3),
wherein the fitting system (1) comprises a plurality of selectable supporting sleeves (6, 6a) for connecting to plastic composite pipes (31) of different inner and/or outer diameters in the manner of a modular system,
- wherein the first connector (2) is provided for producing a fluid connection to a metal pipe (38) or a metallic connecting element (38),
- wherein the second connector (3) is provided for producing a fluid connection to a plastic composite pipe (31), and
- wherein the first connector (2) has at least one threaded connection (17) for connecting to the metal pipe (38) or the metallic connecting element (38),
**characterised in that**
the second connector (3) has at least one supporting sleeve (6, 6a) for connecting to the plastic composite pipe (31), wherein the selectable supporting sleeves (6, 6a) are configured combinably in two parts comprising an inner supporting sleeve (6) and an outer supporting sleeve (6a), wherein by combining an inner supporting sleeve (6) and an outer supporting sleeve (6a), receptacles (8) for receiving plastic composite pipes (31) of different inner and/or outer diameters can be produced.

3. The fitting system (1) according to claim 1 or 2, **characterised in that** the selectable supporting sleeves (5, Sa, 6, 6a) are provided with receptacles (7, 8) for receiving plastic composite pipes (30, 31) of different inner and/or outer diameters.

4. The fitting system (1) according to one of the preceding claims, **characterised in that** at least one receptacle (7, 8) has teeth (9), wherein the teeth (9) are configured to grasp one of the plastic composite pipes (30, 31) to be received.

5. The fitting system (1) according to one of the preceding claims, **characterised in that** at least one connector (2, 3) has a union nut (10, 11), which is configured to clamp one of the plastic composite pipes (30, 31) to be received in the receptacle (7, 8) of the supporting sleeve (5, 5a, 6, 6a).

6. The fitting system (1) according to claim 5, **characterised in that** by screwing the union nut (10, 11) on the connector (2, 3), it creates a clamping effect, which clamps the plastic composite pipe (30, 31) to be received.

7. The fitting system (1) according to one of the preceding claims, **characterised in that** the connecting element (4) comprises a length-compensating piece (12).

8. The fitting system (1) according to claim 7, **characterised in that** the length-compensating piece (12) is formed by an inner pipe (13) and an outer pipe (14), wherein the inner pipe (13) is slidably received in the outer pipe (14) in the manner of a telescope for length compensation.

9. The fitting system (1) according to claim 8, **characterised in that** the length-compensating piece (12) has a union nut (15), which is configured to clamp the inner pipe (13) in the outer pipe (14).

10. The fitting system (1) according to claim 9, **characterised in that** the union nut (15) acts on a conically tapering clamp element (16) surrounding the inner pipe (13) in order to clamp the inner pipe (13).

11. The fitting system (1) according to one of claims 8 to 10, **characterised in that** an extraction lock (36) is provided between the inner pipe (13) and the outer pipe (14), wherein the extraction lock (36) is configured to secure the inner pipe (13) against extraction from the outer pipe (14).

12. The fitting system (1) according to claim 2 or according to claim 2 and one of claims 3 to 11, **characterised in that** the first connector (2) has a threaded connection (17) with a standardised thread, preferably in accordance with DIN 10226-1 (ISO 7-1) or in accordance with ISO 228, more preferably a connection thread in accordance with DIN 10226-1 (ISO 7-1) or a fastening thread in accordance with ISO 228.

13. The fitting system (1) according to claim 2 or according to claim 2 and one of claims 3 to 12, **characterised in that** the threaded connection (17) is configured as an external thread.

14. The fitting system (1) according to claim 2 or according to claim 2 and one of claims 3 to 12, **characterised in that** the threaded connection (17) is configured as an internal thread.

15. The fitting system (1) according to claim 2 or according to claim 2 and one of claims 3 to 14, **characterised in that** the first connector (2) for producing a fluid connection to a metal pipe (38) is made of steel, stainless steel or copper.

## Revendications

1. Système de garniture (1) pour la réparation de systèmes de tuyaux composites en matière plastique, avec
- au moins un premier connecteur (2) pour établir une communication fluidique avec un premier tuyau (30, 38),
- au moins un deuxième connecteur (3) pour établir une communication fluidique avec un deuxième tuyau (31), et
- au moins un élément de connexion (4), lequel connecte le premier connecteur (2) au deuxième connecteur (3),
dans lequel le système de garniture (1) comprend, pour la connexion à des tuyaux composites en matière plastique (30, 31) de diamètres intérieurs et/ou extérieurs différents à la manière d'un composant modulaire une multitude de manchons de support (5, 5a, 6, 6a) pouvant être sélectionnés,
- dans lequel le premier connecteur (2) est prévu pour établir une communication fluidique avec un premier tuyau composite en matière plastique (30),
- dans lequel le deuxième connecteur (3) est prévu pour établir une communication fluidique avec un deuxième tuyau composite en matière plastique (31),
- dans lequel le premier connecteur (2) présente au moins un manchon de support (5, 5a) destiné à être relié au premier tuyau composite en matière plastique (30),
- dans lequel le deuxième connecteur (3) présente au moins un manchon de support (6, 6a) destiné à être relié au deuxième tuyau composite en matière plastique (31),
**caractérisé en ce que** les manchons de support (5, 5a, 6, 6a) pouvant être sélectionnés sont réalisés en deux parties à partir d'un manchon de support intérieur (5, 6) et d'un manchon de support extérieur (5a, 6a) de manière à pouvoir combinés, dans lequel une combinaison d'un manchon de support intérieur (5, 6) et d'un manchon de support extérieur (5a, 6a) permettent de fabriquer des logements (7, 8) pour loger des tuyaux composites en matière plastique (30, 31) de diamètres intérieurs et/ou extérieurs différents.

2. Système de garniture (1) pour la réparation de systèmes de tuyaux, avec
- au moins un premier connecteur (2) pour établir une communication fluidique avec un premier tuyau (38),
- au moins un deuxième connecteur (3) pour établir une communication fluidique avec un deuxième tuyau (31), et
- au moins un élément de connexion (4), lequel connecte le premier connecteur (2) au deuxième connecteur (3),
dans lequel le système de garniture (1) comprend, pour la connexion à des tuyaux composites en matière plastique (31) de diamètres intérieurs et/ou extérieurs différents à la manière d'un composant modulaire une multitude de manchons de support (6, 6a) pouvant être sélectionnés,
- dans lequel le premier connecteur (2) est prévu pour établir une communication fluidique avec un tuyau en métal (38) ou un élément de connexion métallique (38),
- dans lequel le deuxième connecteur (3) est prévu pour établir une communication fluidique avec un tuyau composite en matière plastique (31), et
- dans lequel le premier connecteur (2) présente au moins un raccordement fileté (17) destiné à être relié au tuyau en métal (38) ou à l'élément de connexion métallique (38), **caractérisé en ce que**
le deuxième connecteur (3) présente au moins un manchon de support (6, 6a) destiné à être relié au tuyau composite en matière plastique (31), dans lequel les manchons de support (6, 6a) pouvant être sélectionnés sont réalisés en deux parties à partir d'un manchon de support intérieur (6) et d'un manchon de support extérieur (6a) de manière à pouvoir être combinés, dans lequel la combinaison d'un manchon de support intérieur (6) et d'un manchon de support extérieur (6a) permet de fabriquer des logements (8) pour loger des tuyaux composites en matière plastique (31) de diamètres intérieurs et/ou extérieurs différents.

3. Système de garniture (1) selon la revendication 1 ou 2, **caractérisé en ce que** les manchons de support (5, 5a, 6, 6a) pouvant être sélectionnés sont pourvus de logements (7, 8) pour loger des tuyaux composites en matière plastique (30, 31) de diamètres intérieurs et/ou extérieurs différents.

4. Système d'armature (1) selon l'une quelconque des revendications précédentes, **caractérisé en ce qu'**au moins un logement (7, 8) présente une denture (9), dans lequel la denture (9) est réalisée pour détecter un des tuyaux composites en matière plastique (30, 31) à loger.

5. Système de garniture (1) selon l'une quelconque des revendications précédentes, **caractérisé en ce qu'**au moins un connecteur (2, 3) présente un écrou d'accouplement (10, 11), qui est réalisé pour serrer à bloc un des tuyaux composites en matière plastique (30, 31) à loger dans le logement (7, 8) du manchon de support (5, 5a, 6, 6a).

6. Système de garniture (1) selon la revendication 5, **caractérisé en ce que** l'écrou d'accouplement (10, 11) produit une action de serrage par vissage sur le connecteur (2, 3), laquelle serre à bloc le tuyau composite en matière plastique (30, 31) à loger.

7. Système de garniture (1) selon l'une quelconque des revendications précédentes, **caractérisé en ce que** l'élément de connexion (4) comprend une pièce de compensation de longueur (12).

8. Système de garniture (1) selon la revendication 7, **caractérisé en ce que** la pièce de compensation de longueur (12) est formée par un tuyau intérieur (13) et un tuyau extérieur (14), dans lequel le tuyau intérieur (13) est logé de manière à pouvoir coulisser à la manière d'un télescope dans le tuyau extérieur (14) pour la compensation de longueur.

9. Système de garniture (1) selon la revendication 8, **caractérisé en ce que** la pièce de compensation de longueur (12) présente un écrou d'accouplement (15) qui est réalisé pour serrer à bloc le tuyau intérieur (13) dans le tuyau extérieur (14).

10. Système de garniture (1) selon la revendication 9, **caractérisé en ce que** l'écrou d'accouplement (15) agit sur un élément de serrage (16) entourant le tuyau intérieur (13), convergeant de manière conique pour serrer à bloc le tuyau intérieur (13).

11. Système de garniture (1) selon l'une quelconque des revendications 8 à 10, **caractérisé en ce qu'**un système de blocage anti-extraction (36) est prévu entre le tuyau intérieur (13) et le tuyau extérieur (14), dans lequel le système de blocage anti-extraction (36) est réalisé pour bloquer le tuyau intérieur (13) contre toute extraction hors du tuyau extérieur (14).

12. Système de garniture (1) selon la revendication 2 ou selon la revendication 2 et l'une quelconque des revendications 3 à 11, **caractérisé en ce que** le premier connecteur (2) présente un raccordement fileté (17) avec un filetage normé, de préférence selon la norme DIN 10226-1 (ISO 7 - 1) ou selon la norme ISO 228, par ailleurs de préférence un filetage de raccordement selon la norme DIN 10226-1 (ISO 7-1) ou un filetage de fixation selon la norme ISO 228.

13. Système de garniture (1) selon la revendication 2 ou selon la revendication 2 et l'une quelconque des revendications 3 à 12, **caractérisé en ce que** le raccordement fileté (17) est réalisé en tant qu'un filetage extérieur.

14. Système de garniture (1) selon la revendication 2 ou selon la revendication 2 et l'une quelconque des revendications 3 à 12, **caractérisé en ce que** le raccordement fileté (17) est réalisé en tant qu'un filetage intérieur.

15. Système de garniture (1) selon la revendication 2 ou selon la revendication 2 et l'une quelconque des revendications 3 à 14,
**caractérisé en ce que** le premier connecteur (2) est réalisé pour établir une communication fluidique avec un tuyau en métal (38) composé d'acier, d'acier inoxydable ou de cuivre.
